# EUROPEAN PATENT APPLICATION

(11) **EP 4 383 387 A1**
(43) Date of publication of application: **12.06.2024**
(21) Application number: 23208613.2
(22) Date of filing: 08.11.2023
(51) Int. Cl.: H01M 10/04, H01M 50/183, H01M 50/627, H01M 50/645

(54) **MANUFACTURING METHOD OF POWER STORAGE MODULE AND POWER STORAGE MODULE**

(30) Priority: 08.12.2022 JP 2022196405
(71) Applicant: TOYOTA JIDOSHA KABUSHIKI KAISHA, Toyota-shi, Aichi-ken, 471-8571 (JP)
(72) Inventor: KOMURA, Shingo, Toyota-shi, 471-8571 (JP); KONDO, Yushi, Aichi-ken, 448-8671 (JP)
(74) Representative: D Young & Co LLP

(57) **Abstract**

A manufacturing method of a power storage module (1) includes a stacking process of stacking a plurality of bipolar electrodes (100), a positive terminal electrode (200), and a negative terminal electrode (300), a sealing process of forming a sealing member (20) that seals a space (R) on a peripheral edge portion of each electrode (100, 200, 300) in an electrode laminate (10) such that sealing member (20) is formed while holding a liquid injection member (30), an insulation inspection process of inspecting an insulation state between a positive electrode uncoated portion (112b) and a negative electrode uncoated portion (113b), by applying a voltage to electrode laminate (10) in a state where the inside of sealing member (20) is depressurized from liquid injection member (30), a liquid injection process of supplying an electrolyte solution from liquid injection member (30) into sealing member (20) after the insulation inspection process, and a charging process of charging electrode laminate (10).

## Description

### CROSS REFERENCE TO RELATED APPLICATIONS

This nonprovisional application is based on Japanese Patent Application No. 2022-196405 filed on December 8, 2022, with the Japan Patent Office, the entire contents of which are hereby incorporated by reference.

### BACKGROUND

### Field

The present disclosure relates to a manufacturing method of a power storage module, and a power storage module.

### Description of the Background Art

Japanese Patent Laying-Open No. 2019-87414 discloses a bipolar battery in which a plurality of bipolar electrodes, a positive side terminal electrode, and a negative side terminal electrode are stacked via separators. In this bipolar battery, uncoated portions, on which an active material is not provided, of electrode foils of each electrode face each other with a gap therebetween.

### SUMMARY

In the bipolar battery described in Japanese Patent Laying-Open No. 2019-87414, there may be cases where the inside of the bipolar battery is depressurized until the pressure becomes less than atmospheric pressure, and in this case, the uncoated portion in the electrode foil of the positive side terminal electrode and the uncoated portion in the electrode foil of the negative side terminal electrode deform so as to be recessed toward the inside in a stacking direction due to an internal and external differential pressure of the bipolar battery. In the case where a foreign substance such as a metal fragment is present between each uncoated portion deformed inwardly and the uncoated portions facing these uncoated portions, there is a concern that the pairs of uncoated portions facing each other will make contact via the foreign substance by having this foreign substance pass through the separators, namely, a concern that an internal short circuit may occur.

The presence or absence of an occurrence of this internal short circuit can be detected by inspecting an insulation state between the uncoated portion in the positive terminal electrode or the negative terminal electrode and the uncoated portion facing this uncoated portion, after the manufacture of the bipolar battery. This insulation inspection is performed by applying a voltage to the bipolar battery. However, in the case where an internal short circuit occurs in the bipolar battery, the bipolar battery may reach a so-called thermal runaway state due to the application of a voltage.

Accordingly, after the manufacture of the bipolar battery, while it can be considered to discharge the bipolar battery almost completely and then to perform this insulation inspection, in such a case, a tact time becomes long, and power consumption necessary for the manufacture of the bipolar battery also increases.

The objective of the present disclosure is to provide a manufacturing method of a power storage module, and a power storage module, capable of safely implementing an insulation inspection, while reducing a tact time and power consumption.

A manufacturing method of a power storage module according to one aspect of the present disclosure is a manufacturing method of a power storage module including an electrode laminate having a plurality of mutually stacked bipolar electrodes, a positive terminal electrode disposed on one side of the plurality of bipolar electrodes in a stacking direction of the plurality of bipolar electrodes, and a negative terminal electrode disposed on the other side of the plurality of bipolar electrodes in the stacking direction, a sealing member that seals a pair of electrodes mutually adjacent in the stacking direction of the electrode laminate, and a liquid injection member disposed inside the sealing member and for supplying an electrolyte solution to the electrode laminate, the manufacturing method of a power storage module including a stacking process of stacking the plurality of bipolar electrodes, the positive terminal electrode, and the negative terminal electrode, such that a positive electrode uncoated portion of one electrode in the pair of electrodes mutually adjacent in the stacking direction and a negative electrode uncoated portion of the other electrode face each other, a sealing process of forming the sealing member on a peripheral edge portion of each electrode in the electrode laminate, such that the sealing member that seals a space between the positive electrode uncoated portion and the negative electrode uncoated portion is formed while holding the liquid injection member that opens the space to outside, an insulation inspection process of inspecting an insulation state between the positive electrode uncoated portion in the positive terminal electrode and the negative electrode uncoated portion facing the positive electrode uncoated portion, and an insulation state between the negative electrode uncoated portion in the negative terminal electrode and the positive electrode uncoated portion facing the negative electrode uncoated portion, by applying a voltage to the electrode laminate in a state where the inside of the sealing member is depressurized from the liquid injection member, such that the positive electrode uncoated portion in the positive terminal electrode is recessed toward the inside in the stacking direction, and the negative electrode uncoated portion in the negative terminal electrode is recessed toward the inside in the stacking direction, a liquid injection process of supplying the electrolyte solution from the liquid injection member into the sealing member after the insulation inspection process, and a charging process of charging the electrode laminate.

A power storage module according to one aspect of the present disclosure includes an electrode laminate having a plurality of mutually stacked bipolar electrodes, a positive terminal electrode disposed on one side of the plurality of bipolar electrodes in a stacking direction of the plurality of bipolar electrodes, and a negative terminal electrode disposed on the other side of the plurality of bipolar electrodes in the stacking direction, a sealing member that seals a pair of electrodes mutually adjacent in the stacking direction of the electrode laminate, and a liquid injection member disposed inside the sealing member and for supplying an electrolyte solution to the electrode laminate, each of the plurality of bipolar electrodes has a current collector including a positive electrode current collector foil and a negative electrode current collector foil, a positive electrode active material layer provided on the positive electrode current collector foil in the current collector, and a negative electrode active material layer provided on the negative electrode current collector foil in the current collector, the positive terminal electrode has a positive electrode current collector foil, and a positive electrode active material layer provided on the positive electrode current collector foil, the negative terminal electrode has a negative electrode current collector foil, and a negative electrode active material layer provided on the negative electrode current collector foil, the positive electrode current collector foil in each of the current collectors and the positive electrode current collector foil in the positive terminal electrode have a positive electrode coated portion on which the positive electrode active material layer is provided, and a positive electrode uncoated portion on which the positive electrode active material layer is not provided, the negative electrode current collector foil in each of the current collectors and the negative electrode current collector foil in the negative terminal electrode have a negative electrode coated portion on which the negative electrode active material layer is provided, and a negative electrode uncoated portion facing the positive electrode uncoated portion in the stacking direction and on which the negative electrode active material layer is not provided, the sealing member seals a space formed between the positive electrode uncoated portion of one electrode in the pair of electrodes mutually adjacent in the stacking direction and the negative electrode uncoated portion of the other electrode in a state where the pressure inside the space becomes less than atmospheric pressure, and the liquid injection member communicates the space with outside the sealing member.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a cross-sectional view schematically showing a power storage module in an embodiment of the present disclosure.
Fig. 2 is an enlarged view of a range shown by solid line II in Fig. 1.
Fig. 3 is a cross-sectional view of a liquid injection member.

### DESCRIPTION OF THE PREFERRED EMBODIMENTS

An embodiment of the present disclosure will be described with reference to the figures. Note that, the same reference numerals are attached to same or corresponding members within the figures referred to hereinafter.

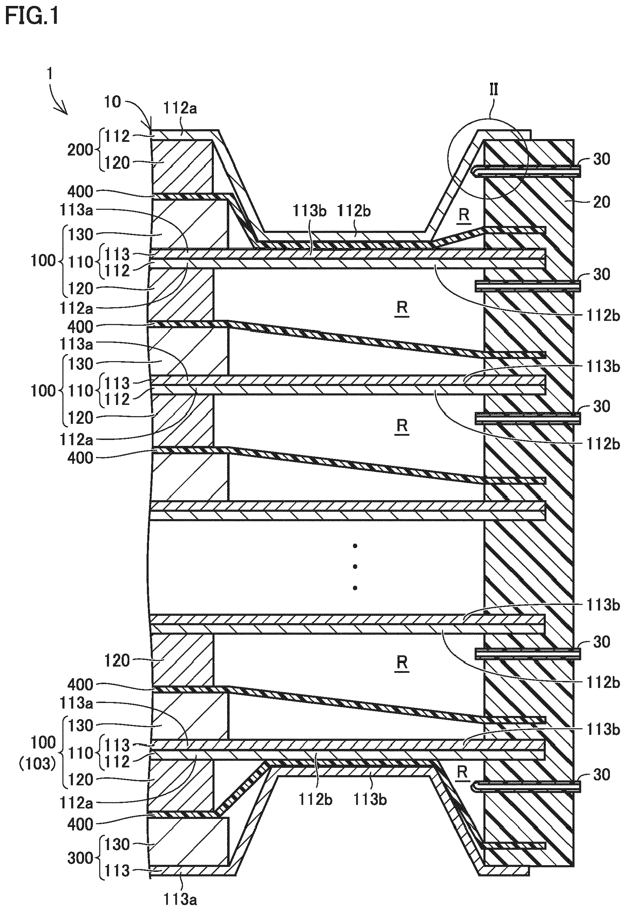

Fig. 1 is a cross-sectional view schematically showing a power storage module in an embodiment of the present disclosure. As shown in Fig. 1, a power storage module 1 includes an electrode laminate 10, a sealing member 20, and a liquid injection member 30.

Electrode laminate 10 has a plurality of bipolar electrodes 100, a positive terminal electrode 200, a negative terminal electrode 300, and a plurality of separators 400.

Plurality of bipolar electrodes 100 are mutually stacked. Each bipolar electrode 100 has a current collector 110, a positive electrode active material layer 120, and a negative electrode active material layer 130.

Current collector 110 is made of metal, and is, for example, formed in a rectangular shape. Current collector 110 has a positive electrode current collector foil 112 and a negative electrode current collector foil 113. Positive electrode current collector foil 112 is, for example, made of aluminum. Negative electrode current collector foil 113 is, for example, made of copper foil. Negative electrode current collector foil 113 is adhered to positive electrode current collector foil 112 by a conductive adhesive.

Positive electrode active material layer 120 is provided on one surface in current collector 110, namely, on the surface of positive electrode current collector foil 112. Negative electrode active material layer 130 is provided on the other surface in current collector 110, namely, on the surface of negative electrode current collector foil 113.

Plurality of bipolar electrodes 100 are stacked such that positive electrode active material layer 120 in one of bipolar electrodes 100, and negative electrode active material layer 130 in bipolar electrode 100 adjacent to the one bipolar electrode 100, are facing each other.

Positive terminal electrode 200 is disposed on one side (upper side in Fig. 1) of plurality of bipolar electrodes 100 in a stacking direction. Positive terminal electrode 200 has positive electrode current collector foil 112, and positive electrode active material layer 120 provided on positive electrode current collector foil 112. The configuration of positive electrode current collector foil 112 and positive electrode active material layer 120 in positive terminal electrode 200 is the same as the configuration of positive electrode current collector foil 112 and positive electrode active material layer 120 in bipolar electrode 100.

Negative terminal electrode 300 is disposed on the other side (lower side in Fig. 1) of plurality of bipolar electrodes 100 in the stacking direction. Negative terminal electrode 300 has negative electrode current collector foil 113, and negative electrode active material layer 130 provided on negative electrode current collector foil 113. The configuration of negative electrode current collector foil 113 and negative electrode active material layer 130 in negative terminal electrode 300 is the same as the configuration of negative electrode current collector foil 113 and negative electrode active material layer 130 in bipolar electrode 100.

Positive electrode current collector foil 112 in each bipolar electrode 100 and positive electrode current collector foil 112 in positive terminal electrode 200 have a positive electrode coated portion 112a and a positive electrode uncoated portion 112b.

Positive electrode coated portion 112a is a part where positive electrode active material layer 120 is provided. Positive electrode coated portion 112a is formed in a center portion of positive electrode current collector foil 112.

Positive electrode uncoated portion 112b is a part where positive electrode active material layer 120 is not provided, namely, a part where positive electrode current collector foil 112 is exposed. Positive electrode uncoated portion 112b is formed around positive electrode coated portion 112a (a peripheral edge portion of positive electrode current collector foil 112).

Negative electrode current collector foil 113 in each bipolar electrode 100 and negative electrode current collector foil 113 in negative terminal electrode 300 have a negative electrode coated portion 113a and a negative electrode uncoated portion 113b.

Negative electrode coated portion 113a is a part where negative electrode active material layer 130 is provided. Negative electrode coated portion 113a is formed in a center portion of negative electrode current collector foil 113.

Negative electrode uncoated portion 113b is a part where negative electrode active material layer 130 is not provided, namely, a part where negative electrode current collector foil 113 is exposed. Negative electrode uncoated portion 113b is formed around negative electrode coated portion 113a (a peripheral edge portion of negative electrode current collector foil 113). Positive electrode uncoated portion 112b of one electrode in pair of electrodes 100, 200, and 300 mutually adjacent in the stacking direction and negative electrode uncoated portion 113b of the other electrode face each other in the stacking direction with a gap therebetween.

Each separator 400 is disposed between pairs of electrodes 100, 200, and 300 mutually adjacent in the stacking direction. Specifically, each separator 400 is disposed between positive electrode active material layer 120 and negative electrode active material layer 130. Each separator 400 is made of an insulating material, and allows the permeation of ions. A polyolefin microporous film (single layer polyethylene structure, three layer structure of polypropylene, polyethylene, and polypropylene or the like) is provided as each separator 400. Note that, a ceramic layer may be provided on at least one surface of the polyolefin microporous film.

Sealing member 20 is made of an insulating material (resin or the like). Sealing member 20 holds a peripheral edge portion of each current collector foil 112 and 113 and a peripheral edge portion of each separator 400. Sealing member 20 seals between pairs of electrodes 100, 200, and 300 mutually adjacent in the stacking direction of electrode laminate 10. More specifically, sealing member 20 seals a space R, which is formed between positive electrode uncoated portion 112b of one electrode in pairs of electrodes 100, 200, and 300 mutually adjacent in the stacking direction and negative electrode uncoated portion 113b of the other electrode (refer to Fig. 1), in a state where a pressure inside space R becomes lower than atmospheric pressure. An electrolyte solution is sealed in space R. Sealing member 20 has a function for preventing leakage of the electrolyte solution from space R and infiltration of moisture from the outside to space R, and a function for securing a gap between positive electrode uncoated portion 112b and negative electrode uncoated portion 113b disposed so as to sandwich space R.

Since each space R is at a pressure lower than atmospheric pressure, as shown in Fig. 1, positive electrode uncoated portion 112b in positive terminal electrode 200 and negative electrode uncoated portion 113b in negative terminal electrode 300 deform so as to be recessed toward the inside in the stacking direction. Space R has a function as a gas pocket for accommodating gas produced from each electrode 100, 200, and 300 at the time of charging and discharging.

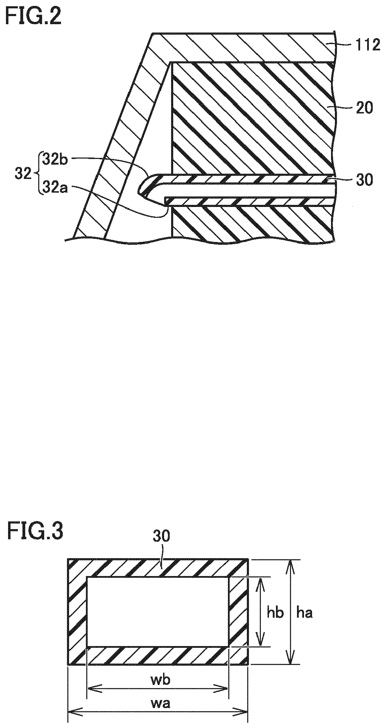

Liquid injection member 30 is a member for supplying the electrolyte solution from outside sealing member 20 to electrode laminate 10. Liquid injection member 30 is disposed inside sealing member 20. Liquid injection member 30 communicates space R with outside sealing member 20. Liquid injection member 30 is, for example, made of resin (polyethylene or the like). As shown in Fig. 3, liquid injection member 30 is formed in a square cylindrical shape. However, liquid injection member 30 is not limited to a square cylindrical shape, if it is cylindrical.

Liquid injection member 30 is used when the inside of sealing member 20 is depressurized. Accordingly, liquid injection member 30 has a rigidity to the extent of not closing at the time of depressurizing inside sealing member 20. For example, a cross-sectional secondary moment of liquid injection member 30 is preferably set to 3.8 mm⁴ or more, and is more preferably set to 4.9 mm⁴ or more. For example, by setting a width wa of liquid injection member 30 (refer to Fig. 3) to 48.5 mm, a height ha (refer to Fig. 3) to 1.0 mm, an opening width wb (refer to Fig. 3) to 47.9 mm, and an opening height hb (refer to Fig. 3) to 0.4 mm, the cross-sectional secondary moment becomes 3.8 mm⁴. Moreover, by setting width wa of liquid injection member 30 to 48.5 mm, height ha to 1.2 mm, opening width wb to 48.1 mm, and opening height hb to 0.8 mm, the cross-sectional secondary moment becomes 4.9 mm⁴.

As shown in Fig. 2, liquid injection member 30 has an exposed end portion 32. Exposed end portion 32 is exposed to space R. Exposed end portion 32 has an inner end portion 32a formed inside in the stacking direction, and an outer end portion 32b formed outside in the stacking direction. Outer end portion 32b is formed at a position closer to electrode laminate 10 than inner end portion 32a.

Next, a manufacturing method of power storage module 1 will be described. This manufacturing methods includes a stacking process, a sealing process, an insulation inspection process, a liquid injection process, a charging process, and a depressurization sealing process. It is possible for this manufacturing process to be applied not only when manufacturing a single power storage module 1, but also when collectively manufacturing a plurality of power storage modules.

In the stacking process, plurality of bipolar electrodes 100, positive terminal electrode 200, and negative terminal electrode 300 are stacked via separators 400. Specifically, plurality of bipolar electrodes 100, positive terminal electrode 200, and negative terminal electrode 300 are stacked via separators 400, such that positive electrode uncoated portion 112b of one electrode in pair of electrodes 100, 200, and 300 mutually adjacent in the stacking direction and negative electrode uncoated portion 113b of the other electrode face each other.

In the sealing process, space R between positive electrode uncoated portion 112b and negative electrode uncoated portion 113b is sealed. Specifically, in the sealing process, sealing member 20 that seals space R between positive electrode uncoated portion 112b and negative electrode uncoated portion 113b is thermally welded to a peripheral edge portion of each electrode 100, 200, and 300 in electrode laminate 10, such that sealing member 20 is formed while holding liquid injection member 30 that opens space R to outside.

The insulation inspection process is performed prior to the liquid injection process. In the insulation inspection process, an insulation state between positive electrode uncoated portion 112b in positive terminal electrode 200 and negative electrode uncoated portion 113b facing positive electrode uncoated portion 112b, and an insulation state between negative electrode uncoated portion 113b in negative terminal electrode 300 and positive electrode uncoated portion 112b facing negative electrode uncoated portion 113b, are inspected by applying a voltage to electrode laminate 10 in a state where the inside of sealing member 20 is depressurized from liquid injection member 30, such that positive electrode uncoated portion 112b in positive terminal electrode 200 is recessed toward the inside in the stacking direction, and negative electrode uncoated portion 113b in negative terminal electrode 300 is recessed toward the inside in the stacking direction. The insulation inspection process is performed as follows.

Namely, power storage module 1 is opened to the atmosphere, after liquid injection member 30 is temporarily sealed in a state where power storage module 1 is disposed inside a depressurization chamber. In this way, positive electrode uncoated portion 112b in positive terminal electrode 200 and negative electrode uncoated portion 113b in negative terminal electrode 300 are recessed toward the inside in the stacking direction. Then, a voltage is applied to electrode laminate 10.

Or, the inside of sealing member 20 is depressurized through liquid injection member 30 in a state where power storage module 1 is placed, for example, under atmospheric pressure, and a voltage is applied to electrode laminate 10 in this state.

For example, in the case where a foreign substance such as a metal fragment is present between positive electrode uncoated portion 112b in positive terminal electrode 200 and negative electrode uncoated portion 113b facing positive electrode uncoated portion 112b, and there is a short circuit between positive electrode uncoated portion 112b and negative electrode uncoated portion 113b through this foreign substance, this short circuit is detected when a voltage is applied to electrode laminate 10. On the other hand, in the case where a short circuit does not occur inside electrode laminate 10, the insulation state is determined to be good.

The liquid injection process is performed after the insulation inspection process. In the liquid injection process, an electrolyte solution is supplied to inside sealing member 20 through each liquid injection member 30. The liquid injection process is performed under atmospheric pressure. Note that, since power storage module 1 is placed under atmospheric pressure in this process, positive electrode uncoated portion 112b in positive terminal electrode 200 and negative electrode uncoated portion 113b in negative terminal electrode 300 return to being approximately flat.

The charging process is performed after the liquid injection process. In the charging process, power storage module 1 is charged up to a prescribed voltage. In this way, the formation of an SEI coating to the negative electrode is performed by decomposition of an electrolyte solvent or additive, and gas that is a byproduct thereof is discharged to outside sealing member 20 through liquid injection member 30.

In the depressurization sealing process after charging, liquid injection member 30 is sealed under a depressurized environment (an environment of a pressure lower than atmospheric pressure). In this way, power storage module 1 is completed. When power storage module 1 moves from a depressurized environment to atmospheric pressure environment, as shown in Fig. 1, positive electrode uncoated portion 112b in positive terminal electrode 200 and negative electrode uncoated portion 113b in negative terminal electrode 300 deform so as to be recessed toward the inside in the stacking direction.

As described above, in the manufacturing method of power storage module 1 in the present embodiment, since the insulation inspection process is performed prior to the liquid injection process, it becomes possible to inspect a presence or absence of a foreign substance causing a short circuit between positive electrode uncoated portion 112b in positive terminal electrode 200 and negative electrode uncoated portion 113b facing positive electrode uncoated portion 112b, or between negative electrode uncoated portion 113b in negative terminal electrode 300 and positive electrode uncoated portion 112b facing negative electrode uncoated portion 113b, prior to the liquid injection process and the charging process, namely, prior to a voltage occurring in electrode laminate 10. Accordingly, it becomes possible to safely implement an insulation inspection, while reducing a tact time and power consumption necessary for the manufacture of power storage module 1.

Moreover, in power storage module 1 in the present embodiment, since liquid injection member 30 communicates space R with outside sealing member 20, when gas is generated from electrode laminate 10 due to an internal short circuit or the like in electrode laminate 10, this gas is discharged to outside sealing member 20 through liquid injection member 30. Accordingly, a discharge direction of gas is prescribed.

The above-stated exemplified embodiments and examples are understood by a person skilled in the art, with the following specific aspects.

### [Aspect 1]

A manufacturing method of a power storage module including an electrode laminate having a plurality of mutually stacked bipolar electrodes, a positive terminal electrode disposed on one side of the plurality of bipolar electrodes in a stacking direction of the plurality of bipolar electrodes, and a negative terminal electrode disposed on the other side of the plurality of bipolar electrodes in the stacking direction, a sealing member that seals a pair of electrodes mutually adjacent in the stacking direction of the electrode laminate, and a liquid injection member disposed inside the sealing member and for supplying an electrolyte solution to the electrode laminate, the manufacturing method of a power storage module including
a stacking process of stacking the plurality of bipolar electrodes, the positive terminal electrode, and the negative terminal electrode, such that a positive electrode uncoated portion of one electrode in the pair of electrodes mutually adjacent in the stacking direction and a negative electrode uncoated portion of the other electrode face each other,
a sealing process of forming the sealing member on a peripheral edge portion of each electrode in the electrode laminate, such that the sealing member that seals a space between the positive electrode uncoated portion and the negative electrode uncoated portion is formed while holding the liquid injection member that opens the space to outside,
an insulation inspection process of inspecting an insulation state between the positive electrode uncoated portion in the positive terminal electrode and the negative electrode uncoated portion facing the positive electrode uncoated portion, and an insulation state between the negative electrode uncoated portion in the negative terminal electrode and the positive electrode uncoated portion facing the negative electrode uncoated portion, by applying a voltage to the electrode laminate in a state where the inside of the sealing member is depressurized from the liquid injection member, such that the positive electrode uncoated portion in the positive terminal electrode is recessed toward the inside in the stacking direction, and the negative electrode uncoated portion in the negative terminal electrode is recessed toward the inside in the stacking direction,
a liquid injection process of supplying the electrolyte solution from the liquid injection member into the sealing member after the insulation inspection process, and
a charging process of charging the electrode laminate.

In this manufacturing method, since the insulation inspection process is performed prior to the liquid injection process, it becomes possible to inspect a presence or absence of a foreign substance causing a short circuit between the positive electrode uncoated portion in the positive terminal electrode and the negative electrode uncoated portion facing the positive electrode uncoated portion, or between the negative electrode uncoated portion in the negative terminal electrode and the positive electrode uncoated portion facing the negative electrode uncoated portion, prior to the liquid injection process and the charging process, namely, prior to a voltage occurring in the electrode laminate. Accordingly, it becomes possible to safely implement an insulation inspection, while reducing a tact time and power consumption necessary for the manufacture of the power storage module.

### [Aspect 2]

The manufacturing method of a power storage module described in Aspect 1, in which
the liquid injection member has an exposed end portion exposed to the space,
the exposed end portion includes
an inner end portion formed inside in a stacking direction, and
an outer end portion formed outside in the stacking direction, and
the outer end portion is formed at a position closer to the electrode laminate than the inner end portion.

In this aspect, in the insulation inspection process, when the positive electrode uncoated portion in the positive terminal electrode and the negative electrode uncoated portion in the negative terminal electrode deform so as to be recessed toward the inside in the stacking direction, these uncoated portions are prevented from closing the opening of the exposed end portion.

### [Aspect 3]

A power storage module including
an electrode laminate having a plurality of mutually stacked bipolar electrodes, a positive terminal electrode disposed on one side of the plurality of bipolar electrodes in a stacking direction of the plurality of bipolar electrodes, and a negative terminal electrode disposed on the other side of the plurality of bipolar electrodes in the stacking direction,
a sealing member that seals a pair of electrodes mutually adjacent in the stacking direction of the electrode laminate, and
a liquid injection member disposed inside the sealing member and for supplying an electrolyte solution to the electrode laminate, in which
each of the plurality of bipolar electrodes has
a current collector including a positive electrode current collector foil and a negative electrode current collector foil,
a positive electrode active material layer provided on the positive electrode current collector foil in the current collector, and
a negative electrode active material layer provided on the negative electrode current collector foil in the current collector,
the positive terminal electrode has
a positive electrode current collector foil, and
a positive electrode active material layer provided on the positive electrode current collector foil,
the negative terminal electrode has
a negative electrode current collector foil, and
a negative electrode active material layer provided on the negative electrode current collector foil,
the positive electrode current collector foil in each of the current collectors and the positive electrode current collector foil in the positive terminal electrode have
a positive electrode coated portion on which the positive electrode active material layer is provided, and
a positive electrode uncoated portion on which the positive electrode active material layer is not provided,
the negative electrode current collector foil in each of the current collectors and the negative electrode current collector foil in the negative terminal electrode have
a negative electrode coated portion on which the negative electrode active material layer is provided, and
a negative electrode uncoated portion facing the positive electrode uncoated portion in the stacking direction and on which the negative electrode active material layer is not provided,
the sealing member seals a space formed between the positive electrode uncoated portion of one electrode in the pair of electrodes mutually adjacent in the stacking direction and the negative electrode uncoated portion of the other electrode in a state where a pressure inside the space becomes less than atmospheric pressure, and
the liquid injection member communicates the space with outside the sealing member.

In this power storage module, since the liquid injection member communicates a space formed between the positive electrode uncoated portion of one electrode in the pair of electrodes and the negative electrode uncoated portion of the other electrode with outside the sealing member, when gas is generated from the electrode laminate due to an internal short circuit or the like in the electrode laminate, this gas is discharged to outside the sealing member through the liquid injection member.

Accordingly, a discharge direction of gas is prescribed.

### [Aspect 4]

The power storage module described in Aspect 3, in which
the liquid injection member has an exposed end portion exposed to the space,
the exposed end portion includes
an inner end portion formed inside in a stacking direction, and
an outer end portion formed outside in the stacking direction, and
the outer end portion is formed at a position closer to the electrode laminate than the inner end portion.

In this aspect, the positive electrode uncoated portion in the positive terminal electrode and the negative electrode uncoated portion in the negative terminal electrode are prevented from closing the opening of the exposed end portion.

Although the embodiments of the present disclosure have been described, the embodiments disclosed this time should be considered as illustrative in all aspects and not limiting. The scope of the present disclosure is indicated by the claims and it is intended that all changes within the meaning and the scope equivalent to the claims are included.

## Claims

1. A manufacturing method of a power storage module (1), comprising:
stacking a plurality of bipolar electrodes (100), a positive terminal electrode (200), and a negative terminal electrode (300);
forming a sealing member (20) that seals a space (R) between a positive electrode uncoated portion (112b) and a negative electrode uncoated portion (113b) on a peripheral edge portion of each electrode (100, 200, 300) in an electrode laminate (10) such that the sealing member (20) is formed while holding a liquid injection member (30) that opens the space to outside;
inspecting an insulation state between a positive electrode uncoated portion (112b) in the positive terminal electrode (200) and a negative electrode uncoated portion (113b) facing the positive electrode uncoated portion, and an insulation state between a negative electrode uncoated portion (113b) in the negative terminal electrode (300) and a positive electrode uncoated portion (112b) facing the negative electrode uncoated portion, by applying a voltage to the electrode laminate in a state where the inside of the sealing member is depressurized from the liquid injection member;
supplying an electrolyte solution from the liquid injection member into the sealing member after the inspecting an insulation state; and
charging the electrode laminate (10).

2. The manufacturing method of a power storage module according to claim 1, wherein
the liquid injection member has an exposed end portion (32) exposed to the space,
the exposed end portion includes
an inner end portion (32a) formed inside in the stacking direction, and
an outer end portion (32b) formed outside in the stacking direction, and
the outer end portion is formed at a position closer to the electrode laminate than the inner end portion.

3. A power storage module (1), comprising:
an electrode laminate (10) having a plurality of bipolar electrodes (100), a positive terminal electrode (200), and a negative terminal electrode (300);
a sealing member (20) that seals a pair of electrodes mutually adjacent in the electrode laminate; and
a liquid injection member (30) for supplying an electrolyte solution to the electrode laminate, wherein
each of the bipolar electrodes has
a current collector (110),
a positive electrode active material layer (120) provided on a positive electrode current collector foil in the current collector, and
a negative electrode active material layer (130) provided on a negative electrode current collector foil in the current collector,
the positive terminal electrode has
a positive electrode current collector foil (112), and
a positive electrode active material layer (120) provided on the positive electrode current collector foil,
the negative terminal electrode has
a negative electrode current collector foil (113), and
a negative electrode active material layer (130) provided on the negative electrode current collector foil,
each of the positive electrode current collector foils has a positive electrode uncoated portion (112b),
each of the negative electrode current collector foils has a negative electrode uncoated portion (113b),
the sealing member seals a space (R) between the positive electrode uncoated portion and the negative electrode uncoated portion in a state where a pressure of the space becomes lower than atmospheric pressure, and
the liquid injection member communicates the space with outside the sealing member.

4. The power storage module according to claim 3, wherein
the liquid injection member has an exposed end portion (32) exposed to the space,
the exposed end portion includes
an inner end portion (32a) formed inside in the stacking direction, and
an outer end portion (32b) formed outside in the stacking direction, and
the outer end portion is formed at a position closer to the electrode laminate than the inner end portion.
